# EUROPEAN PATENT APPLICATION

(11) **EP 1 777 541 A1**
(43) Date of publication of application: **25.04.2007**
(21) Application number: 06122714.6
(22) Date of filing: 20.10.2006
(51) Int. Cl.: G01S 5/14, G01C 21/10

(54) **Telemetry system for vehicles based on position-localization information**

(30) Priority: 21.10.2005 IT TO20050747
(71) Applicant: Geo-Vision Srl., 11100 Aosta (IT)
(72) Inventor: Definis, Graziano, 29010 Ziano Piacentino (IT)
(74) Representative: Jorio, Paolo

(57) **Abstract**

In a telemetry system (1) for a vehicle (3), in particular for monitoring the behaviour of the vehicle (3) along a route (4), there are provided: a position-localization device (2) carried by the vehicle (3) and generating localization data corresponding to the positioning of the vehicle (3) along the route (4); a processing device (5a, 8) connected to the position-localization device (2) for receiving the localization data and determining kinematic quantities of the vehicle (3) as a function of the localization data; and a display device (5b), which is controlled by the processing device (5a, 8) and displays a graphic representation of the kinematic quantities, in particular, a path (11) described by the vehicle (3) with associated states of acceleration and deceleration of the vehicle. The position-localization device (2) is of the satellite type and comprises a receiver, in particular of the GPS type (6).

## Description

The present invention relates to a telemetry system for vehicles, in particular cars (or motor vehicles in general) and motorcycles (or 2- or 3-wheeled motor vehicles in general), based on position localization, in particular satellite localization. The ensuing treatment will make explicit reference, without this, however, implying any loss in generality, to the use of the telemetry system for monitoring kinematic parameters of a vehicle moving along a route.

Known to the art are telemetry systems for a vehicle, which enable detection of a plurality of kinematic parameters corresponding to use of the vehicle along a route, for example, a path on a track or on a road. In particular, these systems comprise: a plurality of sensors coupled to the vehicle, such as acceleration sensors, sensors coupled to the wheels of the vehicle for detecting the speed of rotation thereof, etc., aimed at acquiring a plurality of data corresponding to the behaviour of the vehicle; a plurality of sensors coupled to the route, for example magnetic bands, transducers, beacons, designed to detect the passage of the vehicle in a stretch of the route surveyed thereby, aimed at acquiring data corresponding to times of travel and of position of the vehicle along the route; and processing means for receiving and processing the data acquired by the various sensors coupled to the vehicle and to the route, and provided with display means for enabling a user to display and analyse the behaviour (in terms of kinematic parameters) of the vehicle along the route.

Given the high number of components and sensors, these telemetry systems are extremely costly and difficult to use by unskilled personnel. It follows that their use is as a whole limited to teams of professionals and does not fall within the range of an amateur user. Consequently, the need is particularly felt to provide a telemetry system for vehicles having limited cost and limited complexity of implementation, and hence being accessible even to an amateur user, albeit guaranteeing a high precision of detection and monitoring.

Consequently, according to the present invention, a telemetry system for a vehicle and a telemetry method are provided, as defined in claims 1 and 15, respectively.

For a better understanding of the present invention, preferred embodiments thereof are now described, purely by way of nonlimiting example and with reference to the attached plate of drawings, wherein:
- Figure 1 is a schematic illustration of a telemetry system, according to the present invention;
- Figure 2 shows an example of display of kinematic data within the telemetry system of Figure 1;
- Figure 3 shows an example of two-dimensional display of a path followed by a vehicle with states of acceleration and deceleration highlighted;
- Figure 4 shows an example of three-dimensional display of a path followed by a vehicle with states of acceleration and deceleration highlighted; and
- Figure 5 shows a flowchart corresponding to operations performed by the telemetry system of Figure 1.

The general idea underlying the present invention is that of monitoring the kinematic behaviour of a vehicle along a route, resorting principally to a position-localization system, for example a satellite-localization system of the GPS type, adapted to provide a temporal indication of the position assumed by the vehicle along the route.

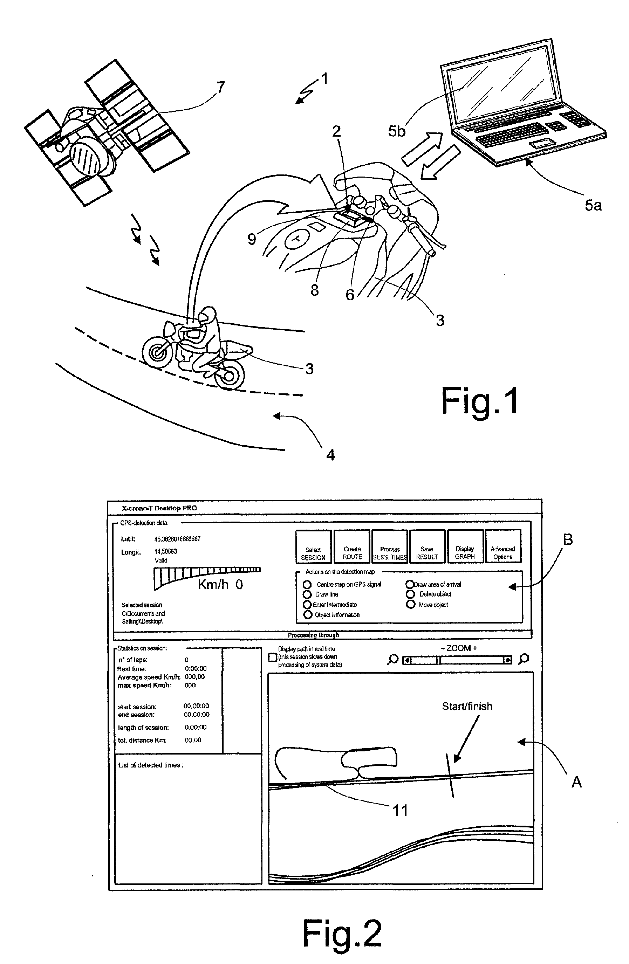

Figure 1 shows a telemetry system for vehicles, designated as a whole by 1. The telemetry system 1 comprises: an on-board device 2, set in use on board a vehicle 3 (for example, a motorcycle), the behaviour of which along a route 4 is to be monitored; and a processing device 5a, configured so as to be connectable to the on-board device 2 and provided with display means 5b.

The on-board device 2, as shown in the detail of Figure 1, comprises a receiver 6, equipped with a receiving antenna and configured so as to receive localization information in wireless mode from a localization system 7; and a control unit 8, connected to the receiver 6 and configured so as to carry out first processing operations on the information received and to generate corresponding localization data of the vehicle 3 along the route 4. In addition, the control unit 8 is provided with an internal memory (not illustrated, for example, a Secure Digital (SD) memory), for recording the aforesaid localization data. In particular, the on-board device 2 is releaseably housed in a purposely provided support 9 coupled to the body of the vehicle 3, for example, in the case of a motorcycle, to a top surface of the tank via fixing means.

According to a currently preferred embodiment of the present invention, which envisages the use of a localization system 7 of a satellite type, in particular GPS (Global Positioning System), the control unit 8 comprises a PDA (Personal Data Assistant) with Microsoft Windows Mobile^{™} or Symbian OS^{™} operating system, and the receiver 6 is a GPS receiver. Conveniently, as is shown in Figure 1, the PDA can be provided with integrated GPS functions, and hence it can be equipped with an integrated antenna for GPS reception (in this case, the on-board device 2 comprises the PDA only). As is known, the GPS system is by now widely used in particular for applications of land, sea, and air navigation and is based on a constellation of 24 satellites in a sub-synchronous orbit of 12 hours around the Earth. Each satellite carries a precision atomic clock and constantly transmits pseudo-random sequences of data. A land receiver, provided with a clock of its own, can derive localization data corresponding to its position (in terms of latitude, longitude and altitude), starting from the information received from four or more satellites, in particular estimating its distance from said satellites on the basis of the times of arrival of the aforesaid pseudo-random sequences of data. A description of GPS may be found, for example, in B. W. Parkinson, J. J. Spilker, "Global Positioning System-Theory and Applications", AIAA, Washington DC, 1996.

On the basis of the localization information received by the receiver 6, the control unit 8 is able to trace the position along the route 4 (with an uncertainty of less than one metre in optimal conditions of quality of the received signal), the speed, and the direction of movement of the vehicle 3 on which the unit is housed. For example, the control unit 8 can be configured so as to detect the aforesaid information at successive instants of calculation, associating to the detection the corresponding temporal instant of detection. In addition, the control unit 8 is able to store in the internal memory the data detected during an entire session of use (where the term session is here understood, for example, as the time interval between an instant of start of the vehicle and an instant of stop of the vehicle). In detail, according to an aspect of the present invention, the control unit 8 interfaces with the receiver 6 via the interfacing standard "NMEA 0183", managed by the National Marine Electronic Association, which envisages that a plurality of "sentences" is acquired by the localization system 7, some of which are default sentences and others are obtained via direct querying of the receiver, each corresponding to given localization information data. In particular, the control unit 8 acquires the so-called "$GPRMC" (Recommended Minimum Specific GNSS Data) sentence, from which, at each instant of calculation, the information concerning the positioning coordinates of the vehicle 3, the speed (expressed in knots), the magnetic variation/declination (expressed in degrees), and the direction of movement are obtained. The control unit 8 moreover acquires the "$GPGSA" (GPS DOP and Satellites Active) sentence and "$GPGSV" (GNSS Satellites in View) sentence in order to carry out appropriate evaluations on the level of quality of the signal received and to apply appropriate corrections on the localization data in the case where said level is lower than a given threshold.

The processing device 5a is constituted, for example, by a personal computer (advantageously of a portable type), and at the end of the session, connects up to the on-board device 2 in order to receive the localization data recorded in the corresponding internal memory (so-called "export" operation). Next, the processing device 5a processes said localization data in order to calculate, exclusively as a function thereof, kinematic data relating to the use of the vehicle 3 along the route 4. In an alternative embodiment, a wireless communication can be envisaged between the on-board device 2 and the processing device 5a for real-time transferring localization data acquired during the session.

In detail, the processing device 5a considers localization data corresponding to successive calculation instants and determines differences between said localization data, in particular the variations, in time, of the position and direction of motion of the vehicle 3. In this way, the processing device 5a is able, amongst other things, to: reconstruct a path described by the vehicle 3 along the route 4; associate to each point of the route itself kinematic information (for example speed) for the vehicle 3 in said point; and determine times of travel between successive points of the route. In addition, in the case where the route 4 corresponds to a closed path on a track, the processing unit 5a can determine times on one lap, intermediate times, maximum speeds (in the entire session or for a single lap), average speeds, etc., and advantageously highlight the differences of paths travelled in successive laps of the track or sessions of use. The processing device 5a is configured for displaying on the corresponding display means 5b (for example, a monitor), in particular within a first display area A, a graphic representation of the kinematic data calculated, and in particular, as is shown in Figure 2, a path 11 described by the vehicle 3 along the route 4. According to one aspect of the present invention, the paths 11 followed by the vehicle 3 in successive laps or in successive recording sessions are displayed superimposed on one another. This function is particularly advantageous for highlighting possible errors or in general differences of behaviour by the user of the vehicle 3 in successive laps or sessions. In detail, the path 11 is shown as a line that is updated with the passage of time (in real time, in the case of wireless communication between the on-board device 2 and the processing device 5a, or a *posteriori,* otherwise). In addition, the display means 5b can display a graphic representation of the evolution in time of each of the kinematic data detected (speed, distances, times, etc.), and/or values assumed by said data, advantageously in conjunction with the aforesaid path 11, in a second display area, designated by B.

According to an aspect of the present invention, the processing device 5a is moreover configured so as to determine states of acceleration and deceleration, whether linear or lateral, of the vehicle 3. This function is particularly advantageous in so far as it enables a user of the vehicle 3 to evaluate *a posteriori* its behaviour and to evaluate any possible corrective/ameliorative action. In detail, the states of linear acceleration and deceleration are calculated on the basis of the differences in speed detected in successive instants of computation. In particular, a state of acceleration (in the portion of route 4 comprised between two successive instants of calculation) is determined in the case where said difference is positive, and a state of deceleration otherwise. As regards the lateral accelerations and decelerations, in a known way, the processing device 5a is configured so as to take into account: the weight of the moving vehicle 3, in the case of a motor vehicle; and the circumference of the wheels, the distance from the ground of the drive member (chain), and the inclination of the vehicle 3, in the case of a 2- or 3-wheeled motor vehicle.

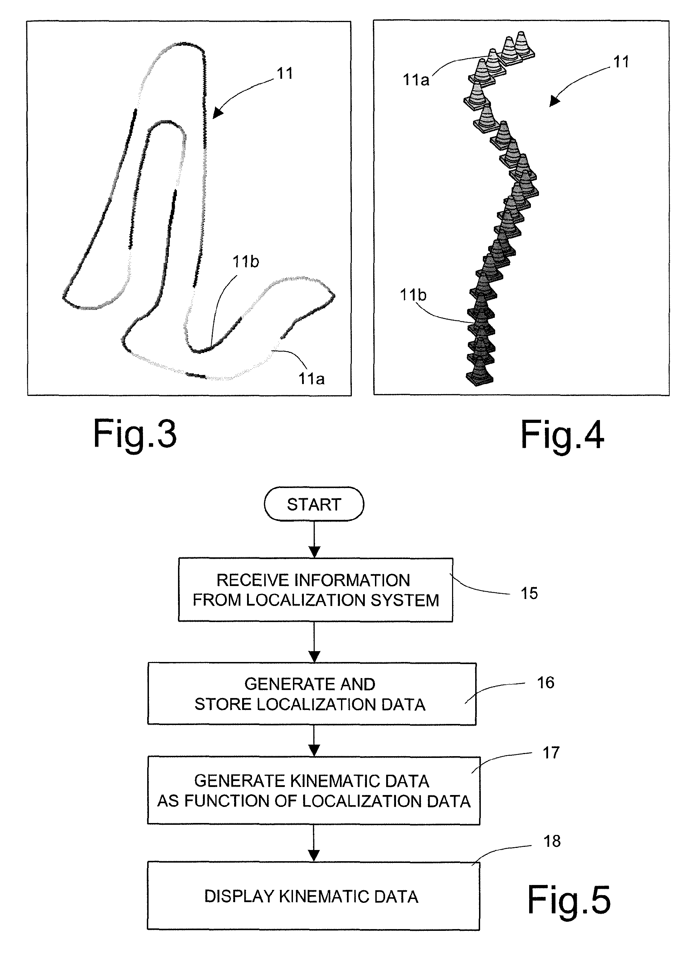

One main aspect of the present invention (see Figure 3) envisages that the information on the calculated states of (linear or lateral) acceleration and deceleration is associated to the display of the path 11. In particular, the path 11 displayed comprises first portions 11a, corresponding to a state of acceleration of the vehicle 3, which are shown with a first symbolic representation (for example, with a first lighter colour, in particular green), and second portions 11b, corresponding to a state of deceleration of the vehicle 3, which are shown with a second symbolic representation (for example, with a second darker colour, in particular red). It is clear that other symbolic representations can be used in an altogether equivalent way, for example ones that envisage the use of a different type of line (for example, a solid line and a dashed line) for the first and second symbolic representations. In addition, the information on the numeric value of the acceleration or deceleration is associated to the first and second symbolic representations, for example as variation of the shade of colour (as in Figure 3) or else as variation in the thickness of the drawn line. Also in this case, the paths of successive laps, or successive sessions, with the annexed information on the states of acceleration or deceleration, can be superimposed on one another.

According to a different aspect of the present invention, the representation of the path 11 described by the vehicle 3 (with the states of acceleration/deceleration associated thereto) is of a three-dimensional type. In this case (see Figure 4), the path is represented as a succession of three-dimensional elements (for example, with a conical shape) with different colours or line styles, according to the state of acceleration or deceleration. In addition, the path 11 can be displayed together with a three-dimensional model of the vehicle 3 and with a simulation of the ground where the vehicle 3 itself is moving, with corresponding changes of altitude (up-hill and down-hill). The particularity of the three-dimensional representation is the simulation of the real time behaviour (or the behaviour simulated *a posteriori*) of the vehicle 3, in so far as an animation is generated and updated exactly recreating the behaviour in the recording session, with the possibility of rewinding the "film" and displaying it also slowed down. Clearly, also in this case, the film can be accompanied by the kinematic data gathered during the session (speed, acceleration, times), which are also updated and displayed.

Figure 5 summarizes the operations performed by the telemetry system 1 described above. In detail, in an initial block (block 15), the receiver 6 on board the vehicle receives localization information from the localization system 7. Then, the control unit 8 processes this information for generating localization data and stores said localization data in the internal memory (block 16). The processing device 5a, in real time or *a posteriori,* receives the localization data, and, as a function of these, generates kinematic data corresponding to the behaviour of the vehicle 3 along the route 4 (block 17). Finally (block 18), the display means 5b, controlled by the processing device 5a, display the graphic representation of the kinematic data previously calculated, for example of the paths described with the associated states of acceleration and deceleration.

From an examination of the characteristics of the telemetry system described above the advantages that it enables to achieve are clear.

In any case, it is emphasized that this system is extremely simple to use and has low costs, in so far as it does not require sensors to be connected to the vehicle 3 or additional sensors to be arranged along the route. This system is also versatile from the hardware standpoint, it being compatible with the most common hardware present on the market. The telemetry system described enables in particular an extremely immediate and striking representation of the behaviour of the vehicle 3 along the route 4, and in particular enables immediate identification of the states of acceleration and deceleration thereof. The possibility of three-dimensional display of the paths followed, within a three-dimensional model of the route, is finally extremely useful and immediately understandable even for unskilled users.

Finally, it is clear that modifications and variations can be made to what is described and illustrated herein, without thereby departing from the scope of the present invention, as defined in the annexed claims.

In particular, the control unit 8 of the on-board device 2 can also be provided with processing capability, and in particular be able to process in real time, or when the session is completed, the localization data, as described above with reference to the processing device 5a. In this case, the on-board device 2 is in turn provided with display means for enabling display of graphs, patterns, paths, etc. (as described above), also without requiring interfacing with the processing device 5a (which, in this case, may not be envisaged in the system).

Satellite-localization systems other than GPS may be used, for example, GLONASS, or else the European system GALILEO, which is to be implemented. Furthermore, either as an alternative or in a complementary way, land localization systems can be used, i.e., ones which exploit a local network of repeaters spread out over the surface of the Earth. This can be advantageous to make up for any possible malfunctioning of GPS, on account of obstructions of the signals sent, and a corresponding insufficient intensity thereof.

The telemetry system described, albeit advantageous for use on a track, can be used in town or out of town, for example in the so-called up-hill race against the clock, in which the point of departure and point of arrival usually do not coincide. The on-board device 2 can advantageously be constituted by a different portable device, for example a last-generation cell phone, provided with integrated GPS functions, which can be advantageously carried by the user of the vehicle.

The processing device 5a can be configured so as to calculate further kinematic data in addition to the ones given previously, such as accelerations from a first to a second speed, pickup, duration of the states of acceleration and deceleration, percentages of stay in the aforesaid states of acceleration and deceleration etc. Finally, the telemetry system 1 could be integrated with sensors of various nature present on board the vehicle, for example, pressure sensors, temperature sensors, etc. for supplying further information on the state of the vehicle.

## Claims

1. A telemetry system (1) for a vehicle (3), in particular for monitoring the behaviour of said vehicle (3) along a route (4), comprising:
- position-localization means (2) carried, in use, by said vehicle (3) and configured to generate localization data corresponding to the positioning of said vehicle (3) along said route (4);
- processing means (5a, 8), connected, in use, to said position-localization means (2) for receiving said localization data and configured to determine kinematic quantities of said vehicle (3) as a function of said localization data; and
- display means (5b), controlled by said processing means (5a, 8) and configured to display a graphic representation of said kinematic quantities.

2. The system according to claim 1, wherein said graphic representation comprises at least a representation of a path (11) described by said vehicle (3) along said route (4).

3. The system according to claim 1 or 2, wherein said graphic representation comprises a superimposition of representations of paths (11) followed in successive time intervals by said vehicle (3) along one and the same path along said route (4).

4. The system according to claim 2 or 3, wherein said processing means (5a, 8) are configured to determine states of acceleration and deceleration of said vehicle (3), and said display means (5b) are configured to display said states of acceleration and deceleration in conjunction with said representation of said path (11).

5. The system according to claim 4, wherein said states of acceleration and deceleration correspond, respectively, to an acceleration and to a deceleration, either linear or lateral, of said vehicle (3).

6. The system according to claim 4 or 5, wherein said representation of said path (11) comprises first portions (11a), corresponding to said states of acceleration and represented with a first mode of representation, and second portions (11b), corresponding to said states of deceleration and represented with a second mode of representation.

7. The system according to claim 6, wherein corresponding to said first and second modes of representation are a first colour and a second colour, respectively, and wherein corresponding to a value of said acceleration or deceleration is a shade of said first colour and said second colour, respectively.

8. The system according to any one of claims 2-7, wherein said representation of said path is of a two-dimensional type and comprises a line drawn in a plane.

9. The system according to any one of claims 2-7, wherein said representation of said path is of a three-dimensional type and comprises a succession of three-dimensional elements, set in a three-dimensional space.

10. The system according to any one of the preceding claims, wherein said position-localization means (2) comprise a unit for receiving (6) electromagnetic waves, and control means (8) connected to said receiving unit (6) and generating said localization data; said control means (8) further comprising storage means configured to record localization data belonging to a telemetry session, and said processing means (5a, 8) being configured to interface with said storage means for receiving said localization data.

11. The system according to claim 10, wherein said position-localization means (2) comprise one between a PDA and a cell phone.

12. The system according to claim 10 or 11, wherein said receiving unit (6) comprises a satellite receiver, in particular GPS, configured to interface with a satellite-localization system (7), in particular of the GPS type.

13. The system according to any one of claims 4-12, wherein said localization data comprise at least a position information on the position of said vehicle (3) along said route (4) and a temporal reference associated to said position information; and wherein said processing means (5a, 8) are configured to determine said states of acceleration and deceleration as a function of variations of localization data generated in successive instants in time.

14. The system according to any one of the preceding claims, wherein said kinematic quantities comprise at least one or more from among: speed, acceleration, pickup, displacements, and associated time intervals.

15. A method of telemetry for a vehicle (3), in particular for monitoring the behaviour of said vehicle (3) along a route (4), comprising:
- detecting, via a position-localization system (2) carried by said vehicle (3), localization data corresponding to positioning of said vehicle (3) along said route (4);
- processing said localization data for determining kinematic quantities of said vehicle (3) as a function of said localization data; and
- displaying a graphic representation of said kinematic quantities.

16. The method according to claim 15, wherein displaying a graphic representation comprises displaying at least a representation of a path (11) described by said vehicle (3) along said route (4).

17. The method according to claim 16, wherein displaying a graphic representation comprises displaying a superimposition of representations of paths described in successive time intervals by said vehicle (3) along one and the same path along said route (4).

18. The method according to claim 16 or 17, wherein processing comprises determining states of acceleration and deceleration of said vehicle (3), and displaying a graphic representation comprises displaying said states of acceleration and deceleration in conjunction with said representation of said path (11).

19. The method according to claim 18, wherein displaying said states of acceleration comprises displaying, with a first mode of representation, first portions (11a) of said path (11) corresponding to said states of acceleration, and displaying said states of deceleration comprises displaying, with a second mode of representation, second portions (11b) of said path (11) corresponding to said states of deceleration.

20. The method according to claim 19, wherein displaying with a first mode of representation comprises displaying said first portions with a first colour, and displaying with a second mode of representation comprises displaying said second portions with a second colour; an intensity of said first and second colours being a function of the value of said acceleration and deceleration, respectively.

21. The method according to any one of claims 16-20, wherein said representation of said path is of a two-dimensional type, and comprises a line drawn in a plane.

22. The method according to any one of claims 16-20, wherein said representation of said path is of a three-dimensional type, and comprises a succession of three-dimensional elements, set in a three-dimensional space.

23. The method according to any one of claims 15-22, wherein said position-localization system (2) is of a satellite type.

24. The method according to any one of claims 18-23, wherein said localization data comprise at least a position information on the position of said vehicle (3) along said route (4) and a temporal reference associated to said position information; and wherein determining states of acceleration and deceleration of said vehicle (3) comprises detecting variations of localization data generated at successive instants in time.

25. The method according to any one of claims 15-24, wherein said kinematic quantities comprise at least one or more from among: speed, acceleration, pickup, displacements and associated time intervals.

26. A software module capable of implementing, when loaded in processing means (5a, 8) belonging to a telemetry system (1) according to any one of claims 1-14, a method of telemetry for a vehicle (3) according to any one of claims 15-25.
